# FASCICULE DE BREVET EUROPEEN

(11) **EP 3 109 156 B1**
(45) Date de publication et mention de la délivrance du brevet: **15.11.2017**
(21) Numéro de dépôt: 16174409.9
(22) Date de dépôt: 14.06.2016
(51) Int. Cl.: B64C 27/12, B64D 31/06, B64D 35/08, F02C 9/42, B64C 27/04, F02C 6/02, F02C 6/20

(54) **PROCEDE DE REGULATION D'UNE INSTALLATION MOTRICE TRIMOTEUR POUR UN AERONEF A VOILURE TOURNANTE**
REGULIERVERFAHREN FÜR EINE DREIMOTORIGE ANTRIEBSANLAGE FÜR EIN DREHFLÜGELFLUGZEUG
METHOD FOR CONTROLLING A THREE-ENGINED POWER PLANT OF A ROTARY-WING AIRCRAFT

(30) Priorité: 23.06.2015 FR 1501299
(43) Date de publication de la demande: 28.12.2016
(73) Titulaire: Airbus Helicopters, 13725 Marignane Cedex (FR)
(72) Inventeur: ROSSOTTO, Régis, 13012 Marseille (FR)
(74) Mandataire: GPI & Associés

(56) Documents cités:
- FR-A1- 2 902 408
- FR-A1- 3 008 957
- GB-A- 2 515 141

## Description

La présente invention se situe dans le domaine de la motorisation des aéronefs à voilures tournantes comportant plusieurs moteurs, et plus particulièrement dans le domaine de la régulation d'une telle motorisation.

La présente invention concerne un procédé de régulation d'une installation motrice pour un aéronef à voilure tournante ainsi que cette installation motrice et un aéronef à voilure tournante muni d'une telle installation motrice. Cette invention est particulièrement destinée à la régulation d'une installation motrice comportant trois moteurs.

Une installation motrice pour un aéronef à voilure tournante comprend généralement un ou deux moteurs et une boîte de transmission principale de puissance. Chaque moteur entraine mécaniquement la boîte de transmission principale de puissance afin de mettre en rotation au moins un arbre principal de sortie de la boîte de transmission principale de puissance. Cet arbre principal de sortie est solidaire en rotation avec au moins un rotor principal de l'aéronef à voilure tournante afin d'assurer la sustentation, voire la propulsion de l'aéronef.

Cette boîte de transmission principale de puissance dispose généralement d'arbres secondaires de sortie pouvant par exemple entrainer en rotation un rotor arrière ou bien une ou deux hélices de propulsion par l'intermédiaire d'une boîte de transmission auxiliaire de puissance ainsi qu'un générateur d'énergie électrique et/ou des systèmes hydrauliques. Les fréquences respectives de rotation de ces arbres secondaires de sortie sont généralement différentes de la fréquence de rotation de l'arbre principal de sortie.

Il est à noter que l'on entend par moteur une unité motrice entrainant mécaniquement ladite boîte de transmission principale de puissance et, par suite, participant à la sustentation et/ou à la propulsion de l'aéronef à voilure tournante. De tels moteurs sont par exemple des turbomoteurs.

Par ailleurs, il est fréquent aujourd'hui d'utiliser sur les aéronefs à voilures tournantes une installation motrice comportant deux moteurs, chaque moteur étant piloté par un calculateur dédié. Ces moteurs sont généralement des turbomoteurs identiques fonctionnant selon des règles de régulation.

Par exemple, il existe la régulation proportionnelle qui permet de réguler un système proportionnellement à un écart entre une valeur courante du système qui doit être régulée et une consigne. Une telle régulation est en général efficace. Par contre, la valeur de la consigne n'est jamais atteinte par une régulation proportionnelle, un écart entre la valeur courante et la consigne existant en permanence. On peut cependant se rapprocher de la consigne en diminuant cet écart, mais le système devient souvent dans ce cas instable.

Une telle régulation proportionnelle, appliquée à une installation motrice bimoteur d'un aéronef, permet un équilibrage naturel des deux moteurs de l'installation motrice, aussi bien en termes de fréquence de rotation que de puissance fournie. Cependant, une stabilité de la fréquence de rotation du rotor principal de l'aéronef ne peut être assurée précisément et efficacement par une telle régulation proportionnelle.

Il est alors possible d'ajouter un calcul d'anticipation de la puissance que doit fournir l'installation motrice afin d'améliorer l'efficacité de cette régulation proportionnelle de la fréquence de rotation du rotor principal de l'aéronef. Un tel calcul d'anticipation de la puissance est notamment décrit dans le document FR3000466 dans le cadre particulier d'une fréquence de rotation variable de ce rotor principal.

Afin d'améliorer la régulation proportionnelle, on peut également introduire une correction supplémentaire qui permet de supprimer des erreurs de suivi de la consigne. Cette correction est proportionnelle à l'intégration de l'écart entre la valeur courante et la consigne dans le temps, c'est-à-dire proportionnelle à la somme de tous les écarts mesurés en permanence. On parle alors d'une régulation proportionnelle intégrale.

Il existe également la régulation proportionnelle intégrale dérivée qui comporte une correction supplémentaire, proportionnelle à la dérivée de cet écart. Cette correction permet de prendre en compte également les variations de cet écart, que ce soit en direction et en amplitude.

Des régulations proportionnelles intégrales sont fréquemment utilisées sur des aéronefs bimoteur permettant ainsi de maitriser parfaitement la fréquence de rotation du rotor principal ainsi que les performances de l'aéronef. Le fonctionnement est alors équilibré entre les deux moteurs de l'installation motrice permettant notamment d'avoir une usure symétrique de ces moteurs ainsi qu'au niveau des liaisons mécaniques en entrée de la boite de transmission principale.

Par contre, de telles régulations proportionnelles intégrales nécessitent des connexions complexes entre les calculateurs des deux moteurs afin que chaque moteur délivre une puissance équivalente. De telles régulations proportionnelles intégrales nécessitent notamment l'utilisation d'une boucle d'équilibrage entre les deux calculateurs.

De plus, ces calculateurs doivent être relativement performants pour permettre une telle régulation. Par exemple, ces calculateurs sont de type « FADEC » selon l'acronyme de la désignation en langue anglaise « Full Authority Digital Engine Control ». Ces calculateurs sont également souvent bi-canaux, c'est-à-dire que les liaisons entre les calculateurs ainsi qu'entre les calculateurs et les moteurs sont doublées afin de sécuriser ces liaisons et, par suite, le fonctionnement de l'installation motrice.

En outre, la taille des aéronefs à voilures tournantes tendant à augmenter, le besoin de puissance au niveau de leur installation motrice augmente également. En conséquence, l'installation motrice de ces aéronefs est amenée à comporter au moins trois moteurs pour être capable de fournir une puissance suffisante.

Les aéronefs à voilures tournantes trimoteur sont aujourd'hui principalement équipés de trois moteurs identiques permettant notamment d'assurer la réactivité de l'installation motrice en cas de panne d'un moteur ainsi que pour simplifier l'installation et l'intégration des moteurs.

On appelle « moteurs identiques » des moteurs ayant des caractéristiques d'entraînement identiques d'un organe rotatif.

A l'inverse, on appelle « moteurs inégaux » des moteurs ayant des caractéristiques d'entraînement distinctes, à savoir des moteurs générant des puissances maximales différentes et/ou des couples maximaux inégaux et/ou des fréquences de rotation maximales d'un arbre de sortie différentes. Ainsi, deux moteurs inégaux peuvent correspondre respectivement à un moteur entraînant un arbre de sortie à plusieurs dizaines de milliers de tours par minute et à un moteur entraînant un arbre de sortie à moins de dix mille tours par minute par exemple.

Pour une installation motrice comportant trois moteurs identiques, les régulations de ces trois moteurs identiques sont généralement identiques, chaque moteur fournissant une puissance équivalente.

Cependant, les régulations de ces trois moteurs identiques peuvent être différentes, deux moteurs étant par exemple considérés comme des moteurs principaux et le troisième moteur étant considéré comme un moteur secondaire. Ce moteur secondaire fournit alors un complément de puissance aux deux moteurs principaux en fonction des sollicitations et des besoins de l'installation motrice. La puissance fournie par le moteur secondaire est alors généralement différente de la puissance de chaque moteur principal.

Il est également possible d'utiliser des moteurs inégaux dans une installation motrice trimoteur afin par exemple de répondre aux exigences de sécurité ou bien de pallier le manque de puissance des moteurs disponibles sur le marché. Pour une telle installation motrice trimoteur, les régulations de ces moteurs peuvent s'avérer encore plus complexes, notamment au niveau de la répartition de la puissance de chaque moteur et de la régulation de la fréquence de rotation du rotor principal.

Dans ces deux cas, que les moteurs de l'installation motrice soient identiques ou bien inégaux, la répartition de puissance entre les moteurs principaux et chaque moteur secondaire de cette installation motrice peut être problématique et complexe à optimiser.

On connait notamment les documents FR2998542, FR2998543 et FR3008957 qui décrivent une installation motrice pour un aéronef à voilure tournante comportant deux moteurs principaux identiques et un moteur secondaire.

Le document FR2998542 décrit un moteur secondaire fournissant une puissance secondaire constante, ce moteur secondaire étant mis en route dans certains cas de vol particuliers tel qu'un atterrissage, un décollage ou un vol stationnaire.

Par contre, le document FR2998543 décrit un moteur secondaire fournissant une puissance secondaire qui est proportionnelle à la puissance principale fournie par chaque moteur principal selon un coefficient de proportionnalité inférieur ou égal à 0.5.

Selon le document FR3008957, les moteurs principaux sont régulés suivant une première consigne de la fréquence de rotation du rotor principal de l'aéronef alors que le moteur secondaire est régulé suivant une deuxième consigne de puissance de ce moteur secondaire. De plus, les moteurs principaux sont régulés également suivant une troisième consigne d'anticipation de puissance afin que les moteurs principaux et le moteur secondaire fournissent conjointement la puissance nécessaire au niveau du rotor principal pour le vol de l'aéronef.

Le dimensionnement de l'installation motrice d'un aéronef s'avère donc complexe, indépendamment de la configuration choisie.

Parmi l'arrière plan technologique, on connaît le document US4479619 qui propose un système de transmission de puissance pour des hélicoptères trimoteur. Cette solution propose également une alternative de débrayage de l'un des trois moteurs. L'hélicoptère Super-Frelon de la demanderesse possédait également trois turbomoteurs identiques.

Le document US3963372 propose une solution de gestion de la puissance et de contrôle des moteurs pour des hélicoptères trimoteur.

Pour pallier le problème des moteurs conçus de manière surdimensionnée, une installation des moteurs à puissances maximales inégales, dans le cas des aéronefs bimoteur, a déjà été envisagée par le passé. C'est le cas du document WO2012/059671 qui propose deux moteurs à puissances maximales inégales.

Par ailleurs, on connait également le document FR 2902408 qui décrit un système de dosage en carburant afin d'équilibrer la puissance délivrée par deux turbomoteurs d'un aéronef. Dans ce but, un écart séparant les marges en puissance des deux turbomoteurs est déterminée, puis le turbomoteur ayant la plus grande marge en puissance est régulé afin d'équilibrer les deux turbomoteurs en puissance en minimisant au maximum cet écart.

Enfin, le document GB 2515141 décrit un système de synchronisation de la marge de performance d'une installation motrice pour aéronef munie par exemple de deux turbomoteurs. Une différence entre les marges de performance des deux turbomoteurs est tout d'abord calculée, puis les deux turbomoteurs sont régulés afin que cette différence atteigne une valeur prédéterminée.

La présente invention a alors pour objet l'optimisation de la régulation d'une installation motrice selon une configuration innovante. En particulier, la présente invention permet de gérer la répartition de puissance entre les moteurs principaux et chaque moteur secondaire de cette installation motrice selon les sollicitations des moteurs principaux.

La présente invention a ainsi pour objet un procédé de régulation d'une installation motrice comportant au moins trois moteurs pour un aéronef à voilure tournante.

Ce procédé de régulation d'une installation motrice pour un aéronef est destiné à une installation motrice comprenant un premier groupe moteur, un second groupe moteur et une boîte de transmission principale de puissance, les deux groupes moteurs entrainant mécaniquement la boîte de transmission principale de puissance afin de mettre en rotation un arbre principal de sortie de la boîte de transmission principale de puissance. L'arbre principal de sortie est solidaire en rotation d'un rotor principal de l'aéronef qui a une fréquence de rotation *NR.* Un premier groupe moteur comprend au moins deux moteurs principaux et un second groupe moteur comprend au moins un moteur secondaire. Chaque moteur principal a plusieurs limitations principales de fonctionnement et fonctionne avec des premières marges vis-à-vis de ces limitations principales de fonctionnement. De même, chaque moteur secondaire a plusieurs limitations secondaires de fonctionnement et fonctionne avec des secondes marges vis-à-vis de ces limitations secondaires de fonctionnement.

Lorsque le moteur est un turbomoteur muni d'un générateur de gaz et d'une turbine libre, ces limitations principales ou secondaires de fonctionnement sont par exemple la fréquence de rotation *NG* du générateur de gaz, la température *T4* des gaz sortant de ce générateur de gaz et le couple de la turbine libre.

En outre, chaque moteur principal et chaque moteur secondaire disposent d'une puissance maximale qui est différente selon la phase de vol et les conditions de fonctionnement de ces moteurs.

Par exemple, une puissance mécanique continue *PMC* est disponible de façon continue au cours du vol de l'aéronef et une puissance mécanique de décollage *PMD* plus importante est disponible pendant un temps limité pour la phase de décollage de l'aéronef.

De plus, afin de compenser une panne d'un moteur, chaque moteur restant opérationnel est amené à fonctionner selon un mode spécial désigné par l'acronyme *OEI* pour la désignation en langue anglaise « One Engine Inoperative ». Ce mode spécial permet à chaque moteur de développer des puissances mécaniques de sécurité plus importantes que la puissance mécanique continue *PMC* avec des contraintes de temps de fonctionnement.

Ce procédé de régulation d'une installation motrice selon l'invention comporte plusieurs étapes au cours desquelles,
- on détermine une première consigne *NR** de la fréquence de rotation *NR* du rotor principal de l'aéronef,
- on régule le fonctionnement de chaque moteur principal selon la première consigne *NR** de la fréquence de rotation *NR* du rotor principal de l'aéronef,
- on détermine une deuxième consigne *W₂** de puissance à fournir par le second groupe moteur, afin que chaque moteur secondaire fonctionne avec la seconde marge la plus faible égale à la première marge la plus faible parmi les premières marges des moteurs principaux du premier groupe moteur, et
- on régule le fonctionnement de chaque moteur secondaire selon la deuxième consigne *W₂** de puissance.

Dans le cadre des aéronefs à voilures tournantes, la première consigne *NR** de la fréquence de rotation *NR* du rotor principal de l'aéronef est traditionnellement une valeur fixe. On détermine alors cette première consigne *NR** fixe au cours du développement de l'aéronef, après des études et essais afin de prendre en compte de nombreux critères, tels que la masse embarquée, la vitesse de déplacement de l'aéronef, l'aérodynamisme ou encore le type de mission.

Toutefois, cette première consigne *NR** de la fréquence de rotation *NR* du rotor principal de l'aéronef peut également être variable, sur une plage généralement prédéfinie, par exemple de l'ordre de 15 à 20% d'une fréquence nominale de rotation de ce rotor principal. Cette variation de la première consigne *NR** permet par exemple la réduction du bruit de l'aéronef ou bien l'amélioration de ses performances aérodynamiques, en particulier pour des vitesses d'avancement élevées.

On détermine alors cette première consigne *NR** variable en permanence et au cours du vol de l'aéronef. Cette première consigne *NR** variable peut être déterminée par un calculateur embarqué dans l'aéronef, tel qu'un système de contrôle automatique de vol désigné par l'acronyme « AFCS » pour la désignation en langue anglaise « Automatic Flight Control System ». Cette première consigne *NR** variable peut notamment être déterminée en fonction, entre autres, des actions sur les commandes de vol, des caractéristiques de vol de l'aéronef et de sa phase de vol.

On régule alors le fonctionnement du premier groupe moteur afin de maitriser la fréquence de rotation *NR* du rotor principal de l'aéronef. Cette fréquence de rotation *NR* est alors sensiblement égale à la première consigne *NR*,* mais peut tout de même varier légèrement autour de cette première consigne *NR** au cours de la régulation dans des phases dynamiques.

On régule par exemple le fonctionnement de chaque moteur principal de ce premier groupe moteur selon une boucle de régulation proportionnelle intégrale, éventuellement par l'intermédiaire d'un premier dispositif de régulation. Ce premier dispositif de régulation assure la régulation de la fréquence de rotation de la turbine libre de chaque moteur principal, chaque moteur principal étant de préférence un turbomoteur géré par un calculateur principal de type FADEC. La turbine libre de chaque moteur principal entraine la boîte de transmission principale de puissance et permet la mise en rotation au moins de l'arbre principal de sortie et, par suite, celle du rotor principal de l'aéronef à voilure tournante à la fréquence de rotation *NR.*

On détermine ensuite une deuxième consigne *W₂** de puissance à fournir par le second groupe moteur, afin que chaque moteur secondaire fonctionne avec la seconde marge la plus faible égale à la première marge la plus faible parmi les premières marges des moteurs principaux du premier groupe moteur.

Cette marge la plus faible parmi les marges vis-à-vis des limitations de fonctionnement d'un moteur est souvent désignée par l'expression « première limitation » dans le domaine aéronautique, et dans le domaine des aéronefs à voilures tournantes en particulier. Cette marge la plus faible est notamment utilisée dans un Instrument de Première Limitation IPL décrit par exemple dans les documents FR2749545 et FR2756256.

Par ailleurs, il est à noter que lorsque les moteurs principaux sont identiques et sont régulés par exemple selon une boucle de régulation proportionnelle ou bien de régulation proportionnelle intégrale, ces moteurs principaux fonctionnent de façon équilibrée lorsqu'ils fonctionnement correctement, c'est-à-dire sans endommagement d'au moins un de ces moteurs principaux. De fait, les premières marges vis-à-vis de leurs limitations principales respectives sont sensiblement égales ou très proches.

On régule enfin le fonctionnement du second groupe moteur afin qu'il fournisse une seconde puissance *W₂.* Par suite, cette seconde puissance *W₂* est sensiblement égale à la deuxième consigne *W₂**, mais peut tout de même varier légèrement autour de cette deuxième consigne *W₂** au cours de la régulation dans des phases dynamiques.

On régule par exemple le fonctionnement de chaque moteur secondaire de ce second groupe moteur selon une boucle de régulation proportionnelle ou bien une boucle de régulation proportionnelle intégrale, éventuellement par l'intermédiaire d'un deuxième dispositif de régulation. La puissance fournie par chaque moteur secondaire est ainsi ajustée sans augmenter la charge de travail du pilote par rapport à un aéronef bimoteur d'un point de vue pilotage afin de maintenir les performances de l'aéronef. Ce deuxième dispositif de régulation assure le contrôle du couple de chaque moteur secondaire afin que le second groupe moteur fournisse la seconde puissance *W₂* alors que la vitesse de rotation de chaque moteur secondaire est imposée par la régulation de chaque moteur principal selon la première consigne *NR*.*

De plus, le deuxième dispositif de régulation comporte autant de calculateurs secondaires que de moteurs secondaires, chaque calculateur secondaire étant relié à un seul moteur secondaire, ces calculateurs secondaires étant reliés entre eux afin de permettre la régulation des moteurs secondaires. Chaque calculateur peut être par exemple de type *FADEC.*

Le deuxième dispositif de régulation peut également réguler le second groupe moteur à l'aide d'un Instrument de Première Limitation IPL. La deuxième consigne *W₂** de puissance peut alors être déterminée à partir d'informations fournies par cet Instrument de Première Limitation IPL des moteurs primaires.

Ainsi, chaque moteur secondaire est utilisé proportionnellement à la sollicitation des moteurs principaux, la seconde marge la plus faible étant égale à la première marge la plus faible des moteurs principaux.

En effet, lorsque les moteurs principaux fonctionnent avec une première marge importante, ils sont loin de leurs limitations principales. Ils fonctionnent donc avec une réserve de puissance importante. Chaque moteur secondaire fonctionne également avec une seconde marge importante et est alors peu sollicité.

Par contre, lorsque les moteurs principaux fonctionnent avec une première marge faible, ils sont proches de leurs limitations principales. Ils fonctionnent alors avec une faible réserve de puissance et peuvent alors avoir besoin d'un surcroît de puissance. Chaque moteur secondaire fonctionne également avec une seconde marge faible et est alors fortement sollicité pour fournir ce surcroît de puissance. La présence de chaque moteur secondaire permet ainsi de réduire la sollicitation des moteurs principaux, qui fonctionneraient encore plus proches de leurs limitations principales sans la présence de chaque moteur secondaire.

Avantageusement, les moteurs principaux et chaque moteur secondaire fonctionnent alors de manière analogue. Notamment, les variations de puissance des moteurs principaux et celles de chaque moteur secondaire sont sensiblement égales. De plus, les transitions de fonctionnement des moteurs principaux et secondaires se font de manière linéaire avec des rampes d'accélération maitrisées pour éviter par exemple des à-coups en lacet de l'aéronef et des oscillations des paramètres de ces moteurs. Enfin, les moteurs principaux et chaque moteur secondaire atteignent leurs limitations respectives de fonctionnement en même temps.

En outre, lorsque les premières et secondes marges sont importantes, chaque moteur secondaire est peu sollicité et chaque moteur principal dispose d'une réserve de puissance importante. Par suite, une panne d'au moins un moteur secondaire passe avantageusement inaperçue pour un pilote de l'aéronef et est alors transparente vis-à-vis du vol de l'aéronef, cette panne n'ayant aucune incidence sur la fréquence de rotation *NR* du rotor principal.

De même, en cas de panne d'un moteur principal, chaque moteur principal non en panne et chaque moteur secondaire fonctionnant respectivement avec une première et seconde marge importante dispose d'une réserve de puissance permettant avantageusement de compenser cette panne d'un moteur principal.

De plus, le fonctionnement des moteurs principaux et secondaires, respectivement avec la première marge et la seconde marge les plus faibles sensiblement égales, est compatible avec l'utilisation d'un Instrument de Première Limitation IPL pour la surveillance de ces moteurs principaux et secondaires.

Enfin, la première marge et la seconde marge étant sensiblement égales, l'usure de chaque moteur principal ou secondaire lors de ce fonctionnement est également sensiblement équivalente. L'ensemble des moteurs de l'installation motrice se dégradent alors sensiblement à la même vitesse. Ces moteurs ont donc un vieillissement sensiblement équivalent durant leur durée de vie et, en particulier, les moteurs principaux, s'ils sont identiques, fournissent alors des puissances maximales sensiblement égales durant leur durée de vie. Ceci permet également de réaliser avantageusement la maintenance de ces moteurs simultanément permettant alors d'optimiser les temps et les coûts de maintenance de chaque groupe moteur.

De préférence, le premier groupe moteur comporte deux moteurs principaux identiques alors que le second groupe moteur comporte un seul moteur secondaire différent des moteurs principaux. Ce moteur secondaire est par exemple moins important en masse et en dimensions que les moteurs principaux et fournit une puissance maximale inférieure à celle de ces moteurs principaux.

Par ailleurs, le premier groupe moteur et le second groupe moteur fournissent conjointement une puissance de sortie *Ws.* Cette puissance de sortie *Ws* est égale à la somme de la seconde puissance *W₂* fournie par le second groupe moteur et d'une première puissance *W₁* fournie par le premier groupe moteur, telle que *Ws* = *W*₁ + *W*₂.

Selon le procédé de régulation d'une installation motrice, on peut déterminer une puissance d'anticipation de vol *Ws** qui correspond à la puissance nécessaire au vol de l'aéronef et qui doit être fournie conjointement par le premier groupe moteur et le second groupe moteur.

Ensuite, on détermine une troisième consigne *W₁** de la puissance à fournir par le premier groupe moteur, telle que *Ws** = *W*₁* + *W*₂*.

Enfin, on peut utiliser cette troisième consigne *W₁** de puissance afin que le premier groupe moteur et le second groupe moteur anticipent le besoin de puissance de l'aéronef et fournissent conjointement la puissance d'anticipation de vol *Ws*.*

La puissance d'anticipation de vol *Ws** peut être déterminée par un moyen d'anticipation en prenant en compte par anticipation des besoins en couple et/ou en puissance au niveau du rotor principal de l'aéronef.

Cette puissance d'anticipation de vol *Ws** peut également être déterminée selon les besoins de performance de l'aéronef notamment à partir d'informations relatives à l'état de vol et aux situations de vol de l'aéronef ainsi qu'en fonction des commandes de vol exécutées par un pilote de cet aéronef. Par exemple, le moyen d'anticipation prend en compte la première consigne *NR** ainsi que l'accélération ou bien la décélération du rotor principal.

Ce moyen d'anticipation peut être intégré à un moyen de calcul présent dans l'aéronef ou bien directement à l'installation avionique de l'aéronef.

En outre, dans le cas particulier d'une phase de vol donnée de cet aéronef et comme la régulation de la fréquence de rotation *NR* du rotor principal est assurée par le premier groupe moteur, la puissance d'anticipation de vol *Ws** peut être constante. Le deuxième dispositif de régulation permet alors d'ajuster la répartition de cette puissance d'anticipation de vol *Ws** nécessaire entre chaque groupe moteur.

Le second groupe moteur est ainsi piloté uniquement en puissance, selon la deuxième consigne *W₂** alors que le premier groupe moteur est régulé afin de maîtriser prioritairement la fréquence de rotation *NR* du rotor principal de l'aéronef. La puissance fournie par chaque groupe moteur peut ainsi être avantageusement optimisée sans dégrader les performances de l'installation motrice et en particulier en respectant la première consigne *NR*.* La répartition de la puissance d'anticipation de vol *Ws** entre les deux groupes moteurs, c'est-à-dire entre la deuxième consigne *W₂** et la troisième consigne *W₁** de puissance, peut alors être réalisée par l'intermédiaire du moyen de calcul selon différents critères de fonctionnement de l'installation motrice.

Selon un premier mode de réalisation de l'invention, on détermine la deuxième consigne *W₂** selon les limitations principales de fonctionnement des moteurs principaux du premier groupe moteur sur l'ensemble du domaine de vol de l'aéronef afin que chaque moteur secondaire fonctionne avec la seconde marge la plus faible égale à la première marge la plus faible du premier groupe moteur.

Cependant, il peut être intéressant, afin d'optimiser les performances de vol de l'aéronef ou bien sa sécurité notamment vis-à-vis des limitations de fonctionnement de l'aéronef, d'adapter la détermination de cette deuxième consigne *W₂** aux conditions de fonctionnement de l'aéronef ou bien à la phase de vol de l'aéronef.

Selon un second mode de réalisation de l'invention, on détermine la deuxième consigne *W₂** selon la limitation de fonctionnement la plus critique de l'installation motrice parmi les limitations principales de fonctionnement des moteurs principaux du premier groupe moteur et des limitations tertiaires de fonctionnement de la boîte de transmission principale de puissance.

En effet, la boîte de transmission principale de puissance a également plusieurs limitations tertiaires de fonctionnement dont un couple limite qu'elle peut transmettre au rotor principal et une température limite de fonctionnement. Ce couple limite et/ou cette température limite de fonctionnement de la boîte de transmission principale de puissance permettent alors de déterminer, en fonction des conditions de fonctionnement courantes, une puissance limite que peut fournir la boîte de transmission principale de puissance.

Ainsi, lorsque la limitation de fonctionnement la plus critique de l'installation motrice est une limitation principale de fonctionnement des moteurs principaux du premier groupe moteur, on détermine la deuxième consigne *W₂** afin que chaque moteur secondaire fonctionne avec la seconde marge la plus faible égale à la première marge la plus faible du premier groupe moteur comme précédemment décrit.

Par contre, lorsque la limitation de fonctionnement la plus critique de l'installation motrice est une limitation tertiaire de la boîte de transmission principale de puissance, on détermine la deuxième consigne *W₂** afin que cette deuxième consigne *W₂** soit égale à la puissance limite de la boîte de transmission principale de puissance à laquelle est soustraite la somme des puissances maximales de chaque moteur principal.

Le domaine de vol dans lequel la limitation de fonctionnement la plus critique de l'installation motrice est une limitation tertiaire de la boîte de transmission principale de puissance se situe généralement pour des pressions atmosphériques et des températures de l'air extérieur à l'aéronef modérées, la pression atmosphérique et la température de l'air extérieur étant liées à l'altitude de vol de l'aéronef.

Dans ce cas, la puissance de sortie *Ws* est constituée principalement, voire uniquement par la somme des premières puissances *W₁* des moteurs principaux.

En effet, la somme des puissances maximales de chaque moteur principal est généralement, dans ces conditions de pression et de température, strictement supérieure à la puissance limite de la boîte de transmission principale de puissance. La deuxième consigne *W₂** déterminée afin d'être égale à la puissance limite de la boîte de transmission principale de puissance à laquelle est soustraite la somme des puissances maximales de chaque moteur principal est donc une valeur négative. La deuxième consigne *W₂** utilisée afin de réguler le fonctionnement du second groupe moteur est alors nulle.

Ainsi, une panne d'au moins un moteur secondaire passe avantageusement inaperçue pour un pilote de l'aéronef et est alors transparente vis-à-vis du vol de l'aéronef. Cependant, bien que la deuxième consigne *W₂** soit nulle, chaque moteur secondaire est tout de même allumé et fonctionne à un régime faible afin de pouvoir être activé rapidement en cas de panne d'un moteur principal.

En outre, les puissances maximales de chaque moteur principal sont différentes selon la phase de vol de l'aéronef et/ou les conditions de vol, notamment la pression et la température de l'air extérieur à l'aéronef.

On peut alors utiliser un algorithme de sélection afin de déterminer de façon automatique la phase de vol de l'aéronef par exemple selon les valeurs de la vitesse horizontale *Vh* et la vitesse verticale *Vz* de l'aéronef. La puissance maximale de chaque moteur principal peut alors être déterminée.

Ce second mode de réalisation permet avantageusement que chaque moteur secondaire soit utilisé et sollicité uniquement lorsque cela est nécessaire. En effet, lorsque la limitation de fonctionnement la plus critique de l'installation motrice est une limitation tertiaire, les moteurs principaux fonctionnent généralement loin de leurs limitations principales. De fait, ces moteurs principaux ont une réserve de puissance importante et n'ont donc pas besoin d'un surcroît de puissance.

Par contre, lorsque la limitation de fonctionnement la plus critique de l'installation motrice est une limitation principale, les moteurs principaux fonctionnent alors plus proches de leurs limitations principales. Dès lors, la réserve de puissance de ces moteurs principaux est réduite et le surcroît de puissance que peut fournir chaque moteur secondaire est utile afin de réduire la sollicitation de ces moteurs principaux.

En cas de panne d'au moins un moteur principal, on peut réguler le fonctionnement de chaque moteur secondaire selon la deuxième consigne *W₂** de puissance de manière identique au premier mode de réalisation. Ainsi, chaque moteur secondaire fonctionne avec la seconde marge la plus faible égale à la première marge la plus faible du premier groupe moteur.

Lors d'une panne d'au moins un moteur principal, on peut également réguler le fonctionnement de chaque moteur secondaire selon la deuxième consigne *W₂** de puissance de manière identique au second mode de réalisation en fonction de la limitation de fonctionnement la plus critique de l'installation motrice.

Cependant, en cas de panne d'au moins un moteur principal, la régulation de chaque moteur secondaire peut également être différente afin de répartir différemment la puissance de l'installation motrice entre chaque moteur principal non en panne et chaque moteur secondaire.

Par exemple, on peut utiliser chaque moteur secondaire fournissant sa puissance maximale disponible. Ainsi, le second groupe moteur fournit une seconde puissance *W₂* maximale afin de limiter la première puissance *W₁* fournie par le premier groupe moteur. On peut ainsi réduire, voire éviter l'utilisation des modes de fonctionnement *OEI* de chaque moteur principal.

On peut aussi réguler le fonctionnement de chaque moteur secondaire selon la première consigne *NR** de la fréquence de rotation *NR* du rotor principal, afin de garantir le respect de cette première consigne *NR*.* Cette régulation peut être réalisée en mode proportionnel ou bien en mode proportionnel intégral.

La présente invention a aussi pour objet une installation motrice destinée à un aéronef et comprenant un premier et un second groupes moteurs et une boîte de transmission principale de puissance. Les deux groupes moteurs entrainent mécaniquement la boîte de transmission principale de puissance afin de mettre en rotation au moins un arbre principal de sortie de cette boîte de transmission principale de puissance. Cet arbre principal de sortie est solidaire en rotation d'un rotor principal de l'aéronef à une fréquence de rotation *NR.*

Un premier groupe moteur comprend au moins deux moteurs principaux et un premier dispositif de régulation. Ce premier dispositif de régulation est configuré pour réguler le fonctionnement de chaque moteur principal selon une première consigne *NR** de la fréquence de rotation *NR* du rotor principal de l'aéronef.

Un second groupe moteur comprend au moins un moteur secondaire et un deuxième dispositif de régulation. Ce deuxième dispositif de régulation est configuré pour réguler la puissance fournie par chaque moteur secondaire selon une deuxième consigne *W₂** de puissance à fournir par ce second groupe moteur.

Chaque moteur principal a plusieurs limitations principales de fonctionnement et fonctionne avec des premières marges vis-à-vis de ces limitations principales de fonctionnement. De même, chaque moteur secondaire a plusieurs limitations secondaires de fonctionnement et fonctionne avec des secondes marges vis-à-vis de ces limitations secondaires de fonctionnement. La boîte de transmission principale de puissance a également plusieurs limitations tertiaires de fonctionnement telles qu'un couple limite et une température limite de fonctionnement.

Un moyen de calcul est configuré pour déterminer la deuxième consigne *W₂** selon les modes de réalisation du procédé de régulation d'une installation motrice précédemment décrit. Ce moyen de calcul peut être situé dans l'installation motrice ou bien dans l'aéronef.

L'installation motrice peut également comporter un moyen d'anticipation configuré pour déterminer la puissance d'anticipation de vol *Ws** nécessaire au vol de l'aéronef et qui doit être fournie conjointement par les premier et second groupes moteurs. Une troisième consigne *W₁** de la puissance à fournir par le premier groupe moteur est ainsi déterminée telle que *Ws** = *W*₁*** + *W*₂*.

Enfin, cette troisième consigne *W₁** de puissance peut alors être utilisée afin que le premier groupe moteur et le second groupe moteur anticipent le besoin de puissance de l'aéronef et fournissent conjointement la puissance d'anticipation de vol *Ws*.*

Le premier groupe moteur comporte de préférence deux moteurs principaux identiques et le second groupe moteur comporte un seul moteur secondaire différent des moteurs principaux.

En cas de panne d'au moins un moteur principal, le deuxième dispositif de régulation peut réguler le fonctionnement de chaque moteur secondaire selon la première consigne *NR** de la fréquence de rotation *NR* du rotor principal en mode proportionnel ou bien en mode proportionnel intégral. Le deuxième dispositif de régulation peut également réguler le fonctionnement de chaque moteur secondaire selon la deuxième consigne *W₂** de puissance telle que précédemment déterminée ou bien en délivrant la puissance maximale disponible de chaque moteur secondaire.

La présente invention a aussi pour objet un aéronef à voilure tournante comportant au moins un rotor principal, une installation motrice telle que précédemment décrite et une installation avionique, l'installation motrice entrainant en rotation le rotor principal. Le moyen de calcul, le deuxième dispositif de régulation de l'installation motrice peut être situé dans l'installation avionique de l'aéronef.

L'invention et ses avantages apparaîtront avec plus de détails dans le cadre de la description qui suit avec des exemples de réalisations donnés à titre illustratif en référence aux figures annexées qui représentent :
- la figure 1, un aéronef à voilure tournante équipé d'un dispositif de régulation d'une installation motrice selon l'invention, et
- la figure 2, un schéma synoptique du procédé de régulation d'une installation motrice selon l'invention,
- la figure 3, une courbe représentant les zones de limitations de fonctionnement de l'installation motrice.

Les éléments présents dans plusieurs figures distinctes sont affectés d'une seule et même référence.

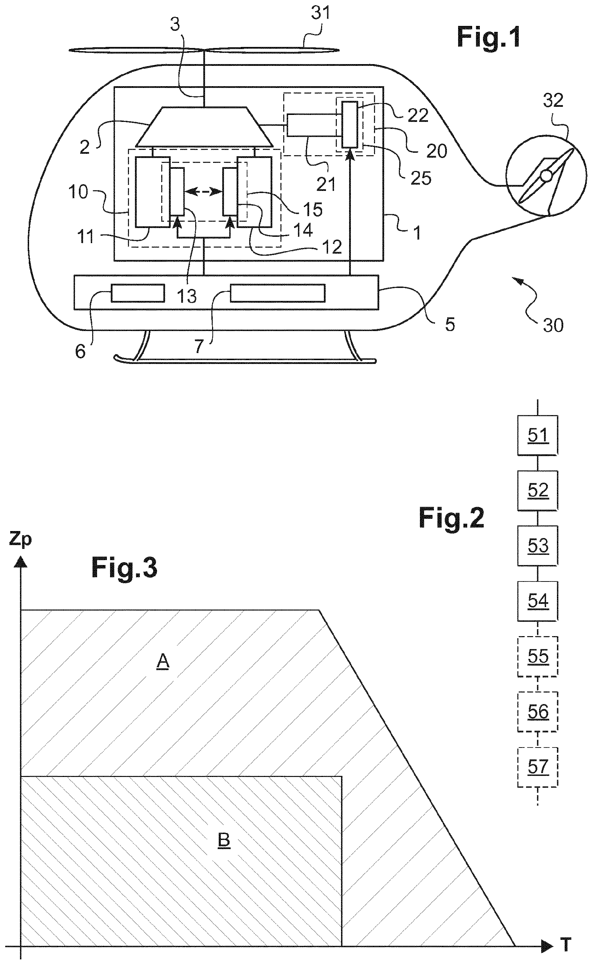

La figure 1 représente un aéronef 30 à voilure tournante comportant un rotor principal 31, un rotor arrière 32, une installation motrice 1 et une installation avionique 5. L'installation motrice 1 comporte un premier groupe moteur 10, un second groupe moteur 20 et une boîte de transmission principale de puissance 2. Les deux groupes moteurs 10,20 entraînent mécaniquement la boîte de transmission principale de puissance 2 afin de mettre en rotation un arbre principal de sortie 3 de cette boîte de transmission principale de puissance 2. Cet arbre principal de sortie 3 est solidaire en rotation avec le rotor principal 31 qui tourne à une fréquence de rotation *NR* afin d'assurer la sustentation, voire la propulsion de l'aéronef 30.

Le rotor arrière 32 peut également être entrainé en rotation par la boite de transmission mécanique de puissance 2 par l'intermédiaire d'un arbre secondaire de sortie de cette boîte de transmission principale de puissance 2.

Le premier groupe moteur 10 comprend deux moteurs principaux 11,12 identiques et un premier dispositif de régulation 15. Ce premier dispositif de régulation 15 comporte deux calculateurs principaux 13,14, chaque calculateur principal 13,14 étant relié à un seul moteur principal 11,12. Les calculateurs principaux 13,14 sont également reliés entre eux.

Le second groupe moteur 20 comprend un moteur secondaire 21 et un deuxième dispositif de régulation 25. Ce deuxième dispositif de régulation 25 comporte un calculateur secondaire 22 relié au moteur secondaire 21. Le moteur secondaire 21 est différent des moteurs principaux 11,12. Ce moteur secondaire 21 est moins important en masse et en dimensions que les moteurs principaux 11,12 et fournit une puissance maximale inférieure à celle de ces moteurs principaux 11,12.

Les moteurs principaux 11,12 ainsi que le moteur secondaire 21 sont des turbomoteurs comportant un générateur de gaz et une turbine libre entrainant la boîte de transmission principale de puissance 2.

Les moteurs principaux 11,12 et le moteur secondaire 21 peuvent fournir des puissances maximales qui sont différentes selon la phase de vol et les conditions de fonctionnement de ces moteurs, notamment une puissance mécanique continue *PMC,* une puissance mécanique de décollage *PMD* et des puissances mécaniques de sécurité *OEI.*

De plus, chaque moteur principal 11,12 fonctionne avec des premières marges vis-à-vis de limitations principales de fonctionnement et le moteur secondaire 21 fonctionne avec des secondes marges vis-à-vis de limitations secondaires de fonctionnement. Ces limitations principales ou secondaires de fonctionnement sont par exemple la fréquence de rotation *NG* du générateur de gaz, la température *T4* des gaz sortant de ce générateur de gaz et le couple de la turbine libre.

La boîte de transmission principale de puissance 2 a également plusieurs limitations tertiaires de fonctionnement telles qu'un couple limite et une température limite de fonctionnement.

L'installation avionique 5 comprend, un moyen de calcul 6 et un moyen d'anticipation 7.

La figure 2 représente un schéma synoptique du procédé de régulation d'une installation motrice selon l'invention. Ce procédé de régulation d'une installation motrice comporte quatre étapes principales.

Au cours d'une première étape 51, on détermine une première consigne *NR** de la fréquence de rotation *NR* du rotor principal 31. Cette première consigne *NR** peut être une valeur fixe déterminée au cours du développement de l'aéronef 30 ou bien une valeur variable déterminée alors en permanence, au cours du vol de l'aéronef 30 par le moyen de calcul 6.

Au cours d'une deuxième étape 52, on régule le fonctionnement de chaque moteur principal 11,12 selon la première consigne *NR** de la fréquence de rotation *NR* du rotor principal 31 par l'intermédiaire du premier dispositif de régulation 15.

Ainsi, le premier groupe moteur 10 permet, grâce au premier dispositif de régulation 15, de maitriser la fréquence de rotation *NR* du rotor principal 31, cette fréquence de rotation *NR* étant sensiblement égale à la première consigne *NR*.*

Ce premier dispositif de régulation 15 assure par exemple la régulation des deux moteurs principaux 11,12 selon une boucle de régulation proportionnelle intégrale. Ces deux moteurs principaux 11,12 étant identiques, leur fonctionnement est alors symétrique, chaque moteur principal 11,12 contribuant à parts égales à l'entrainement du rotor principal 31 par l'intermédiaire de l'arbre principal de sortie 3.

Au cours d'une troisième étape 53, on détermine une deuxième consigne *W₂** de puissance à fournir par le second groupe moteur 20.

Selon un premier mode de réalisation de ce procédé, on détermine la deuxième consigne *W₂** de façon identique sur l'ensemble du domaine de vol de l'aéronef 30. La deuxième consigne *W₂** est déterminée par l'intermédiaire du moyen de calcul 6 selon les limitations principales de fonctionnement des moteurs principaux 11,12 du premier groupe moteur 10 afin que le moteur secondaire 21 fonctionne avec la seconde marge la plus faible égale à la première marge la plus faible parmi les premières marges des moteurs principaux 11,12.

Selon un second mode de réalisation de ce procédé, on détermine la deuxième consigne *W₂** de façon différente selon la limitation de fonctionnement la plus critique de l'installation motrice 1 parmi les limitations principales de fonctionnement des moteurs principaux 11,12 et des limitations tertiaires de fonctionnement de la boîte de transmission principale de puissance 2.

Deux cas sont possibles, représentés sur le graphique de la figure 3, selon le domaine de vol de l'aéronef 30, et en particulier selon la pression atmosphérique *Zp* autour de l'aéronef 30 liée à son altitude et la température *T* de l'air extérieur à l'aéronef 30.

Ainsi, lorsque la limitation de fonctionnement la plus critique de l'installation motrice 1 est une limitation principale de fonctionnement des moteurs principaux 11,12, correspondant à la zone *A* sur la figure 3, on détermine la deuxième consigne *W₂** comme pour le premier mode de réalisation de ce procédé, c'est-à-dire afin que le moteur secondaire 21 fonctionne avec la seconde marge la plus faible égale à la première marge la plus faible du premier groupe moteur 10.

Par contre, lorsque la limitation de fonctionnement la plus critique de l'installation motrice 1 est une limitation tertiaire de la boîte de transmission principale de puissance 2, correspondant à la zone *B* sur la figure 3, on détermine la deuxième consigne *W₂** afin que cette deuxième consigne *W₂** soit égale à la puissance limite de la boîte de transmission principale de puissance 2 à laquelle est soustraite la somme des puissances maximales de chaque moteur principal 11,12. Cette puissance limite que peut fournir la boîte de transmission principale de puissance est déterminée en fonction de son couple limite ou bien de sa température limite de fonctionnement et des conditions de fonctionnement courantes.

Le domaine de vol, dans lequel la limitation de fonctionnement la plus critique de l'installation motrice 1 est une limitation tertiaire de la boîte de transmission principale de puissance 2, se situe par exemple, selon la figure 3, pour une pression atmosphérique correspondant à une altitude comprise entre 500 et 10000 pieds (ft) et une température de l'air extérieur à l'aéronef 30 comprise entre -40 et 15 degrés Celsius (°C).

Cependant, ces valeurs varient fortement d'un aéronef à l'autre ainsi que selon la puissance que peuvent fournir ses moteurs principaux, en fonction par exemple de leur état de vieillissement. En outre, pour un aéronef donné, plus la puissance fournie par les moteurs principaux est importante, plus la zone *B* de la figure 3 est grande.

Au cours d'une quatrième étape 54, on régule le fonctionnement du moteur secondaire 21 selon la deuxième consigne *W₂** de puissance par l'intermédiaire du deuxième dispositif de régulation 25. Le second groupe moteur 21 fournit ainsi une seconde puissance *W₂* sensiblement égale à la deuxième consigne *W₂.*

Le fonctionnement du moteur secondaire 21 est ainsi optimisé en fonction du besoin de puissance au niveau des moteurs principaux 11,12. Le moteur secondaire 21 est notamment fortement sollicité lorsque les moteurs principaux 11,12 sont eux même fortement sollicités. La seconde puissance *W₂* de ce moteur secondaire 21 permet ainsi de réduire la sollicitation de ces moteurs principaux 11,12.

Le procédé de régulation d'une installation motrice peut également comporter trois étapes supplémentaires.

Au cours d'une cinquième étape 55, on détermine une puissance d'anticipation de vol *Ws** par le moyen d'anticipation 7. Cette puissance d'anticipation de vol *Ws** correspond à la puissance nécessaire au vol de l'aéronef 30 et qui doit être fournie conjointement par les moteurs principaux 11,12 et le moteur secondaire 21.

Au cours d'une sixième étape 56, on détermine par le moyen de calcul 6 une troisième consigne *W₁** de la puissance que doit fournir le premier groupe moteur 10, telle que *Ws** = *W*₁*** + *W*₂*.

Au cours d'une septième étape 57, on utilise la troisième consigne *W₁** de puissance afin que le premier groupe moteur 10 et le second groupe moteur 20 anticipent un besoin de puissance de l'aéronef 30 et fournissent conjointement la puissance d'anticipation de vol *Ws*.*

Le premier groupe moteur 10 et le second groupe moteur 20 fournissent alors conjointement une puissance de sortie *Ws* qui est égale à la somme de la seconde puissance *W₂* fournie par le second groupe moteur 20 et d'une première puissance *W₁* fournie par le premier groupe moteur 10, telle que *Ws* = *W*₁ + *W*₂*.*

La première puissance *W₁* est alors sensiblement égale à la troisième consigne *W₁** et la puissance de sortie *Ws* est sensiblement égale à la puissance d'anticipation de vol *Ws*.*

Par ailleurs, en cas de panne d'un moteur principal 11,12, on peut réguler le fonctionnement du moteur secondaire 21 selon la deuxième consigne *W₂** de puissance de manière identique au premier mode de réalisation. Ainsi, le moteur secondaire 21 fonctionne avec la seconde marge la plus faible égale à la première marge la plus faible du premier groupe moteur 10.

On peut également, en cas de panne d'un moteur principal 11,12, réguler le fonctionnement du moteur secondaire 21 selon la deuxième consigne *W₂** de puissance de manière identique au second mode de réalisation.

Cependant, en cas de panne d'un moteur principal 11,12, la régulation du moteur secondaire 21 peut également être différente afin de répartir différemment la puissance fournie par l'installation motrice 1 entre le moteur principal 11,12 non en panne et le moteur secondaire 21.

Par exemple, on peut utiliser le moteur secondaire 21 fournissant sa puissance maximale disponible. Le second groupe moteur 20 fournit alors une seconde puissance *W₂* maximale afin de limiter la première puissance *W₁* fournie par le premier groupe moteur 10. On peut ainsi réduire, voire éviter l'utilisation des modes de fonctionnement *OEI* de chaque moteur principal 11,12 et des puissances mécaniques de sécurité associées.

On peut aussi réguler le fonctionnement du moteur secondaire 21 selon la première consigne *NR** de la fréquence de rotation *NR* du rotor principal 31, afin de garantir le respect de cette première consigne *NR*.* Cette régulation peut être réalisée en mode proportionnel ou bien en mode proportionnel intégral.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications annexées.

## Revendications

1. Procédé de régulation d'une installation motrice (1) d'un aéronef à voilure tournante (30), ladite installation motrice (1) comprenant un premier groupe moteur (10), un second groupe moteur (20) et une boîte de transmission principale de puissance (2), les deux groupes moteurs (10,20) entrainant mécaniquement ladite boîte de transmission principale de puissance (2) afin de mettre en rotation un arbre principal de sortie (3) de ladite boîte de transmission principale de puissance (2), ledit arbre principal de sortie (3) étant solidaire en rotation d'un rotor principal (31) dudit aéronef (30) ayant une fréquence de rotation *NR,* ledit premier groupe moteur (10) comprenant au moins deux moteurs principaux (11,12), ledit second groupe moteur (20) comprenant au moins un moteur secondaire (21), chaque moteur principal (11,12) ayant plusieurs limitations principales de fonctionnement et fonctionnant avec des premières marges vis-à-vis respectivement de chacune desdites limitations principales de fonctionnement, chaque moteur secondaire (21) ayant plusieurs limitations secondaires de fonctionnement et fonctionnant avec des secondes marges vis-à-vis respectivement de chacune desdites limitations secondaires de fonctionnement,
au cours duquel,
- on détermine une première consigne *NR** de ladite fréquence de rotation *NR* dudit rotor principal (31),
- on régule le fonctionnement de chaque moteur principal (11,12) selon ladite première consigne *NR** de ladite fréquence de rotation *NR,*
- on détermine une deuxième consigne *W₂** de puissance à fournir par ledit second groupe moteur (20), afin que chaque moteur secondaire (21) fonctionne avec ladite seconde marge la plus faible égale à ladite première marge la plus faible dudit premier groupe moteur (10), et
- on régule le fonctionnement de chaque moteur secondaire (21) selon ladite deuxième consigne *W₂** de puissance.

2. Procédé de régulation d'une installation motrice (1) selon la revendication 1,
**caractérisé en ce que**
- on détermine une puissance d'anticipation de vol *Ws** nécessaire au vol dudit aéronef (30) et que doivent fournir conjointement ledit premier groupe moteur (10) et ledit second groupe moteur (20),
- on détermine une troisième consigne *W₁** de la puissance à fournir par ledit premier groupe moteur (10), telle que *Ws** = *W*₁*** + *W*₂*, et
- on utilise ladite troisième consigne *W₁** de puissance afin que ledit premier groupe moteur (10) et ledit second groupe moteur (20) anticipent un besoin de puissance dudit aéronef (30) et fournissent conjointement ladite puissance d'anticipation de vol *Ws*.*

3. Procédé de régulation d'une installation motrice (1) selon l'une quelconque des revendications 1 à 2,
**caractérisé en ce que**, ladite boîte de transmission principale de puissance (2) ayant plusieurs limitations tertiaires de fonctionnement dont une puissance limite qu'elle peut transmettre audit arbre de sortie (3), chaque moteur principal (11,12) pouvant fournir une puissance maximale, lorsque la limitation de fonctionnement la plus critique de ladite installation motrice (1) est une limitation tertiaire de ladite boîte de transmission principale de puissance (2), on détermine ladite deuxième consigne *W₂** afin qu'elle soit égale à ladite puissance limite de ladite boîte de transmission principale de puissance (2) à laquelle est soustraite la somme desdites puissances maximales de chaque moteur principal (11,12).

4. Procédé de régulation d'une installation motrice (1) selon la revendication 3,
**caractérisé en ce que** l'on définit ladite puissance maximale de chaque moteur principal (11,12) selon la phase de vol dudit aéronef (30).

5. Procédé de régulation d'une installation motrice (1) selon la revendication 4,
**caractérisé en ce que** l'on utilise un algorithme de sélection afin de déterminer ladite phase de vol dudit aéronef (10) selon les valeurs d'une vitesse horizontale *Vh* et d'une vitesse verticale *Vz* dudit aéronef (10).

6. Procédé de régulation d'une installation motrice (1) selon l'une quelconque des revendications 1 à 5,
**caractérisé en ce qu'**en cas de panne d'au moins un moteur principal (11,12), on régule le fonctionnement de chaque moteur secondaire (21) selon ladite première consigne *NR** de ladite fréquence de rotation *NR* dudit rotor principal (31).

7. Procédé de régulation d'une installation motrice (1) selon l'une quelconque des revendications 1 à 5,
**caractérisé en ce qu'**en cas de panne d'au moins un moteur principal (11,12), on régule le fonctionnement de chaque moteur secondaire (21) selon ladite deuxième consigne *W₂** de puissance.

8. Procédé de régulation d'une installation motrice (1) selon l'une quelconque des revendications 1 à 5,
**caractérisé en ce qu'**en cas de panne d'au moins un moteur principal (11,12), on régule le fonctionnement de chaque moteur secondaire (21) afin qu'il fournisse sa puissance maximale.

9. Procédé de régulation d'une installation motrice (1) selon l'une quelconque des revendications 1 à 8,
**caractérisé en ce que** ledit premier groupe moteur (10) comporte deux moteurs principaux (11,12) identiques et ledit second groupe moteur (20) comporte un moteur secondaire (21).

10. Installation motrice (1) destinée à un aéronef (30) comprenant un premier groupe moteur (10), un second groupe moteur (20) et une boîte de transmission principale de puissance (2), les deux groupes moteurs (10,20) entrainant mécaniquement ladite boîte de transmission principale de puissance (2) afin de mettre en rotation au moins un arbre principal de sortie (3) de ladite boîte de transmission principale de puissance (2), ledit arbre principal de sortie (3) étant solidaire en rotation d'un rotor principal (31) dudit aéronef (30) ayant une fréquence de rotation *NR,* ledit premier groupe moteur (10) comprenant au moins deux moteurs principaux (11,12) et un premier dispositif de régulation (15), ledit premier dispositif de régulation (15) étant configuré pour réguler le fonctionnement de chaque moteur principal (11,12) selon une première consigne *NR** de ladite fréquence de rotation *NR* dudit rotor principal (31), ledit second groupe moteur (20) comprenant au moins un moteur secondaire (21) et un deuxième dispositif de régulation (25), ledit deuxième dispositif de régulation (25) étant configuré pour réguler le fonctionnement de chaque moteur secondaire (21) selon une deuxième consigne *W₂** de puissance dudit second groupe moteur (20), chaque moteur principal (11,12) ayant plusieurs limitations principales de fonctionnement et fonctionnant avec des premières marges vis-à-vis desdites limitations principales de fonctionnement, chaque moteur secondaire (21) ayant plusieurs limitations secondaires de fonctionnement et fonctionnant avec des secondes marges vis-à-vis desdites limitations secondaires de fonctionnement,
**caractérisée en ce que** ladite installation motrice (1) comporte un moyen de calcul (6) configuré pour déterminer ladite deuxième consigne *W₂** afin que chaque moteur secondaire (21) fonctionne avec ladite seconde marge la plus faible égale à ladite première marge la plus faible dudit premier groupe moteur (10).

11. Installation motrice (1) selon la revendication 10,
**caractérisée en ce que** ledit moyen de calcul (6) comporte un moyen d'anticipation (7) étant configuré pour déterminer une puissance d'anticipation de vol *Ws** nécessaire au vol dudit aéronef (30) et que doivent fournir conjointement ledit premier groupe moteur (10) et ledit second groupe moteur (20), une troisième consigne *W₁** à fournir par ledit premier groupe moteur (10), définie telle que *Ws** = *W*₁* + *W*₂*, étant utilisée afin que ledit premier groupe moteur (10) et ledit second groupe moteur (20) anticipent un besoin de puissance dudit aéronef (30) et fournissent conjointement ladite puissance d'anticipation de vol *Ws*.*

12. Installation motrice (1) selon l'une quelconque des revendications 10 à 11,
**caractérisée en ce que**, ladite boîte de transmission principale de puissance (2) ayant plusieurs limitations tertiaires de fonctionnement dont une puissance limite, chaque moteur principal (11,12) pouvant fournir une puissance maximale, lorsque la limitation de fonctionnement la plus critique de ladite installation motrice (1) est une limitation de ladite boîte de transmission principale de puissance (2), ledit moyen de calcul (6) détermine ladite deuxième consigne *W₂** égale à ladite puissance limite de ladite boîte de transmission principale de puissance (2) à laquelle est soustraite la somme desdites puissances maximales de chaque moteur principal (11, 12).

13. Installation motrice (1) selon la revendication 12,
**caractérisée en ce que** ladite puissance maximale de chaque moteur principal (11,12) est définie selon la phase de vol dudit aéronef (30).

14. Installation motrice (1) selon l'une quelconque des revendications 10 à 13,
**caractérisée en ce que** ledit premier groupe moteur (10) comporte deux moteurs principaux (11,12) identiques et ledit second groupe moteur (20) comporte un moteur secondaire (21).

15. Installation motrice (1) selon l'une quelconque des revendications 10 à 14,
**caractérisée en ce qu'**en cas de panne d'au moins un moteur principal (11,12), ledit deuxième dispositif de régulation (25) est configuré pour réguler le fonctionnement de chaque moteur secondaire (21) selon ladite première consigne *NR** de ladite fréquence de rotation *NR* dudit rotor principal (31).

16. Aéronef (30) à voilure tournante comportant au moins un rotor principal (31), une installation motrice (1) et une installation avionique (5), ladite installation motrice (1) entrainant en rotation ledit rotor principal (31),
**caractérisé en ce que** ladite installation motrice (1) est selon l'une quelconque des revendications 10 à 15.

## Patentansprüche

1. Verfahren zum Regeln einer Triebwerksanlage (1) eines Drehflügel-Luftfahrzeugs (30), wobei die Triebwerksanlage (1) ein erstes Antriebsaggregat (10), ein zweites Antriebsaggregat (20) und ein Hauptleistungsgetriebe (2) aufweist, wobei die beiden Antriebsaggregate (10, 20) mechanisch das Hauptleistungsgetriebe (2) antreiben, um eine Hauptantriebswelle (3) des Hauptleistungsgetriebes (2) zu drehen, wobei die Hauptantriebswelle (3) drehfest mit einem Hauptrotor (31) des Luftfahrzeugs (30) verbunden ist, der eine Rotationsfrequenz *NR* aufweist, wobei das erste Antriebsaggregat (10) mindestens zwei Hauptmotoren (11, 12) aufweist, das zweite Antriebsaggregat (20) mindestens einen sekundären Motor (21) aufweist, wobei jeder Hauptmotor (11, 12) mehrere Hauptbetriebseinschränkungen aufweist und mit ersten Margen bezüglich jeder Hauptbetriebseinschränkung betrieben wird, wobei jeder sekundäre Motor (21) mehrere sekundäre Betriebseinschränkungen aufweist und mit zweiten Margen bezüglich jeweils einer jeden dieser sekundären Betriebseinschränkungen betrieben wird,
bei dem
- ein erster Sollwert *NR** der Rotationsfrequenz *NR* des Hauptrotors (31) bestimmt wird,
- der Betrieb eines jeden Hauptmotors (11, 12) gemäß dem ersten Sollwert *NR** der Rotationsfrequenz *NR* geregelt wird,
- ein zweiter Sollwert *W₂** für die von dem zweiten Antriebsaggregat (20) zu liefernde Leistung bestimmt wird, damit jeder sekundäre Motor (21) mit der zweiten, kleineren Marge betrieben wird, die gleich der ersten, kleineren Marge des ersten Antriebsaggregats (10) ist, und
- der Betrieb eines jeden sekundären Motors (21) gemäß dem zweiten Leistungssollwert *W₂** geregelt wird.

2. Verfahren zum Regeln einer Triebwerksanlage (1) nach Anspruch 1, **dadurch gekennzeichnet, dass**
- eine prognostizierte Flugleistung *Wₛ** bestimmt wird, die erforderlich ist für den Flug des Luftfahrzeug (30) und die von dem ersten Antriebsaggregat (10) und dem zweiten Antriebsaggregat (20) zusammen geliefert werden muss,
- ein dritter Sollwert *W₁** der von dem ersten Antriebsaggregat (10) zu liefernden Leistung bestimmt wird, derart, dass *Wₛ** = *W₁** + *W₂** gilt, und
- der dritte Leistungssollwert *W₁** verwendet wird, damit das erste Antriebsaggregat (10) und das zweite Antriebsaggregat (20) einen Leistungsbedarf des Luftfahrzeugs (30) prognostizieren, und zusammen die prognostizierte Flugleistung *Wₛ** liefern.

3. Verfahren zum Regeln einer Triebwerksanlage (1) nach einem der Ansprüche 1 bis 2,
**dadurch gekennzeichnet, dass** das Hauptleistungsgetriebe (2) mehrere tertiäre Betriebseinschränkungen aufweist, von denen eine eine begrenzte Leistung ist, die das Getriebe auf die Ausgangswelle (3) übertragen kann, wobei jeder Hauptmotor (11, 12) eine maximale Leistung liefern kann, wenn die kritischste Betriebseinschränkung der Triebwerksanlage (1) eine tertiäre Einschränkung des Hauptleistungsgetriebes (2) ist, wobei der zweite Sollwert *W₂** so bestimmt wird, dass dieser gleich der begrenzten Leistung des Hauptleistungsgetriebes (2), von der die Summe der maximalen Leistungen eines jeden Hauptmotors (11, 12) abgezogen wird, ist.

4. Verfahren zum Regeln einer Triebwerksanlage (1) nach Anspruch 3, **dadurch gekennzeichnet, dass** die maximale Leistung eines jeden Hauptmotors (11, 12) gemäß der Flugphase des Luftfahrzeugs (30) definiert wird.

5. Verfahren zum Regeln einer Triebwerksanlage (1) nach Anspruch 4, **dadurch gekennzeichnet, dass** ein Ausfallalgorithmus verwendet wird, um die Flugphase des Luftfahrzeugs (10) gemäß den Werten einer horizontalen Geschwindigkeit *Vh* und einer vertikalen Geschwindigkeit *Vz* des Luftfahrzeugs (30) zu bestimmen.

6. Verfahren zum Regeln einer Triebwerksanlage (1) nach einem der Ansprüche 1 bis 5,
**dadurch gekennzeichnet, dass** im Falle eines Ausfalls mindestens eines Hauptmotors (11, 12) der Betrieb eines jeden sekundären Motors (21) gemäß dem ersten Sollwert *NR** der Rotationsfrequenz *NR* des Hauptrotors (31) geregelt wird.

7. Verfahren zum Regeln einer Triebwerksanlage (1) nach einem der Ansprüche 1 bis 5,
**dadurch gekennzeichnet, dass** im Falle eines Ausfalls mindestens eines Hauptmotors (11, 12) der Betrieb eines jeden sekundären Motors (21) gemäß dem zweiten Leistungssollwert *W₂** geregelt wird.

8. Verfahren zum Regeln einer Triebwerksanlage (1) nach einem der Ansprüche 1 bis 5,
**dadurch gekennzeichnet, dass** im Fall eines Ausfalls mindestens eines Hauptmotors (11, 12) der Betrieb eines jeden sekundären Motors (21) so geregelt wird, dass dieser seine maximale Leistung liefert.

9. Verfahren zum Regeln einer Triebwerksanlage (1) nach einem der Ansprüche 1 bis 8,
**dadurch gekennzeichnet, dass** das erste Antriebsaggregat (10) zwei identische Hauptmotoren (11, 12) aufweist, und das zweite Antriebsaggregat (20) einen sekundären Motor (21) aufweist.

10. Triebwerksanlage (1) für ein Luftfahrzeug (30) mit einem ersten Antriebsaggregat (10), einem zweiten Antriebsaggregat (20) und einem Hauptleistungsgetriebe (2), wobei die beiden Antriebsaggregate (10, 20) mechanisch das Hauptleistungsgetriebe (2) antreiben, um mindestens eine Hauptantriebswelle (3) des Hauptleistungsgetriebes (2) zu drehen, wobei die Hauptantriebswelle (3) drehfest mit einem Hauptrotor (31) des Luftfahrzeugs (30) verbunden ist, der eine Rotationsfrequenz *NR* aufweist, wobei das erste Antriebsaggregat (10) mindestens zwei Hauptmotoren (11, 12) und eine erste Regelvorrichtung (15) aufweist, wobei die erste Regelvorrichtung (15) ausgebildet ist, um den Betriebs eines jeden Hauptmotors (11, 12) gemäß einem ersten Sollwert *NR** der Rotationsfrequenz *NR* des Hauptrotors (31) zu regeln, wobei das zweite Antriebsaggregat (20) mindestens einen sekundären Motor (21) und eine zweite Regelvorrichtung (25) aufweist, wobei die zweite Regelvorrichtung (25) ausgebildet ist, um den Betrieb eines jeden sekundären Motors (21) gemäß einem zweiten Leistungssollwert *W₂** des zweiten Antriebsaggregats (20) zu regeln, wobei jeder Hauptmotor (11, 12) mehrere Hauptbetriebseinschränkungen aufweist und mit ersten Margen bezüglich dieser Hauptbetriebseinschränkungen betrieben wird, wobei jeder sekundäre Motor (21) mehrere sekundäre Betriebseinschränkungen aufweist und mit zweiten Margen bezüglich dieser sekundären Betriebseinschränkungen betrieben wird, **dadurch gekennzeichnet, dass** die Triebwerksanlage (1) ein Rechenmittel (6) aufweist, das ausgebildet ist, um den zweiten Sollwert *W₂** zu bestimmen, damit jeder sekundäre Motor (21) mit der zweiten, kleineren Marge betrieben wird, die gleich der ersten, kleineren Marge des ersten Antriebsaggregats (10) ist.

11. Triebwerksanlage (1) nach Anspruch 10,
**dadurch gekennzeichnet, dass** das Rechenmittel (6) ein Prognostizierungsmittel (7) aufweist, das ausgebildet ist, um eine prognostizierte Flugleistung *Wₛ** zu bestimmen, die für den Flug des Luftfahrzeugs (30) erforderlich ist und von dem ersten Antriebsaggregat (10) und dem zweiten Antriebsaggregat (20) zusammen geliefert werden muss, wobei ein dritter Sollwert *W₁*,* der von dem ersten Antriebsaggregat (10) geliefert werden muss, der so definiert ist, dass *Wₛ** = *W₁** + *W₂** gilt, verwendet wird, damit das erste Antriebsaggregat (10) und das zweite Antriebsaggregat (20) einen Leistungsbedarf des Luftfahrzeugs (30) prognostizieren und zusammen die prognostizierte Flugleistung *W_{S}** liefern.

12. Triebwerksanlage (1) nach einem der Ansprüche 10 bis 11,
**dadurch gekennzeichnet, dass** das Hauptleistungsgetriebe (2) mehrere tertiäre Betriebseinschränkungen aufweist, darunter eine begrenzte Leistung, wobei jeder Hauptmotor (11, 12) eine maximale Leistung liefern kann, wenn die kritischste Betriebseinschränkung der Triebwerksanlage (1) eine Begrenzung des Hauptleistungsgetriebes (2) ist, wobei das Rechenmittel (6) den zweiten Sollwert W₂* so bestimmt, dass dieser gleich der begrenzten Leistung des Hauptleistungsgetriebes (2) ist, von der die Summe der maximalen Leistungen eines jeden Hauptmotors (11, 12) abgezogen wird.

13. Triebwerksanlage (1) nach Anspruch 12,
**dadurch gekennzeichnet, dass** die maximale Leistung eines jeden Hauptmotors (11, 12) gemäß der Flugphase des Luftfahrzeugs (30) definiert wird.

14. Triebwerksanlage (1) nach einem der Ansprüche 10 bis 13,
**dadurch gekennzeichnet, dass** das erste Antriebsaggregat (10) zwei identische Hauptmotoren (11, 12) aufweist, und das zweite Antriebsaggregat (20) einen sekundären Motor (21) aufweist.

15. Triebwerksanlage (1) nach einem der Ansprüche 10 bis 14,
**dadurch gekennzeichnet, dass** im Falle eines Ausfalls mindestens eines Hauptmotors (11, 12) die zweite Regelvorrichtung (25) ausgebildet ist, um den Betrieb eines jeden sekundären Motors (21) gemäß dem ersten Sollwert NR* der Rotationsfrequenz NR des Hauptrotors (31) zu regeln.

16. Drehflügel-Luftfahrzeug (30) mit mindestens einem Hauptrotor (31), einer Triebwerksanlage (1) und einer Avionikanlage (5), wobei die Triebwerksanlage (1) den Hauptrotor (31) dreht,
**dadurch gekennzeichnet, dass** die Triebwerksanlage (1) eine Triebwerksanlage gemäß einem der Ansprüche 10 bis 15 ist.

## Claims

1. Method of regulating a power plant (1) of a rotary wing aircraft (30), said power plant (1) comprising a first engine group (10), a second engine group (20) and a main power transmission gearbox (2), the two engine groups (10,20) mechanically driving said main power transmission gearbox (2) in order to rotate a main output shaft (3) of said main power transmission gearbox (2), said main output shaft (3) being integral in rotation with a main rotor (31) of said aircraft (30) having a frequency of rotation *NR*, said first engine group (10) comprising at least two main engines (11,12), said second engine group (20) comprising at least one secondary engine (21), each main engine (11,12) having a plurality of main operating limits and operating with first margins relative respectively to each of said main operating limits, each secondary engine (21) having a plurality of secondary operating limits and operating with second margins relative respectively to each of said secondary operating limits,
in the course of which,
- a first setpoint *NR** of said frequency of rotation *NR* of said main rotor (31) is determined,
- the operation of each main engine (11,12) is regulated according to said first setpoint *NR** of said frequency of rotation *NR*,
- a second setpoint *W₂** of power to be delivered by said second engine group (20), so that each secondary engine (21) operates with said lowest second margin equal to said lowest first margin of said first engine group (10), is determined, and
- the operation of each secondary engine (21) is regulated according to said second setpoint *W₂** of power.

2. Method of regulating a power plant (1) according to claim 1,
**characterised in that**
- a flight anticipation power *Ws** necessary for the flight of said aircraft (30) and which has to be delivered jointly by said first engine group (10) and said second engine group (20) is determined,
- a third setpoint *W₁** of the power to be delivered by said first engine group (10) is determined, such that: *Ws** = *W*₁* + *W*₂*, and
- said third setpoint *W₁** of power is used so that said first engine group (10) and said second engine group (20) anticipate a power need of said aircraft (30) and deliver jointly said flight anticipation power *Ws*.*

3. Method of regulating a power plant (1) according to any one of claims 1 to 2,
**characterised in that**, said main power transmission gearbox (2) having a plurality of tertiary operating limits including a limit power which it can transmit to said output shaft (3), each main engine (11,12) being capable of delivering a maximum power, when the most critical operating limit of said power plant (1) is a tertiary limit of said main power transmission gearbox (2), said second setpoint *W₂** is determined so that it is equal to said limit power of said main power transmission gearbox (2) from which the sum of said maximum powers of each main engine (11,12) is subtracted.

4. Method of regulating a power plant (1) according to claim 3,
**characterised in that** said maximum power of each main engine (11,12) is defined according to the phase of flight of said aircraft (30).

5. Method of regulating a power plant (1) according to claim 4,
**characterised in that** a selection algorithm is used so as to determine said phase of flight of said aircraft (10) according to the values of a horizontal speed Vh and of a vertical speed Vz of said aircraft (10).

6. Method of regulating a power plant (1) according to any one of claims 1 to 5,
**characterised in that** in the event of failure of at least one main engine (11,12), the operation of each secondary engine (21) is regulated according to said first setpoint *NR** of said frequency of rotation *NR* of said main rotor (31).

7. Method of regulating a power plant (1) according to any one of claims 1 to 5,
**characterised in that** in the event of failure of at least one main engine (11,12), the operation of each secondary engine (21) is regulated according to said second setpoint *W₂** of power.

8. Method of regulating a power plant (1) according to any one of claims 1 to 5,
**characterised in that** in the event of failure of at least one main engine (11,12), the operation of each secondary engine (21) is regulated so that it delivers its maximum power.

9. Method of regulating a power plant (1) according to any one of claims 1 to 8,
**characterised in that** said first engine group (10) comprises two identical main engines (11,12) and said second engine group (20) comprises one secondary engine (21).

10. Power plant (1) intended for an aircraft (30) comprising a first engine group (10), a second engine group (20) and a main power transmission gearbox (2), the two engine groups (10,20) mechanically driving said main power transmission gearbox (2) in order to rotate at least one main output shaft (3) of said main power transmission gearbox (2), said main output shaft (3) being integral in rotation with a main rotor (31) of said aircraft (30) having a frequency of rotation *NR*, said first engine group (10) comprising at least two main engines (11,12) and a first regulating device (15), said first regulating device (15) being configured to regulate the operation of each main engine (11,12) according to a first setpoint *NR** of said frequency of rotation *NR* of said main rotor (31), said second engine group (20) comprising at least one secondary engine (21) and a second regulating device (25), said second regulating device (25) being configured to regulate the operation of each secondary engine (21) according to a second setpoint *W₂** of power of said second engine group (20), each main engine (11,12) having a plurality of main operating limits and operating with first margins relative to said main operating limits, each secondary engine (21) having a plurality of secondary operating limits and operating with second margins relative to said secondary operating limits, **characterised in that** said power plant (1) comprises a calculation means (6) configured to determine said second setpoint *W₂** so that each secondary engine (21) operates with said lowest second margin equal to said lowest first margin of said first engine group (10).

11. Power plant (1) according to claim 10,
**characterised in that** said calculation means (6) comprises an anticipation means (7) being configured to determine a flight anticipation power *Ws** necessary for the flight of said aircraft (30) and which has to be delivered jointly by said first engine group (10) and said second engine group (20), a third setpoint *W₁** to be delivered by said first engine group (10), defined such that *Ws** = *W₁** + *W₂**, being used so that said first engine group (10) and said second engine group (20) anticipate a power need of said aircraft (30) and deliver jointly said flight anticipation power *Ws*.*

12. Power plant (1) according to any one of claims 10 to 11,
**characterised in that**, said main power transmission gearbox (2) having a plurality of tertiary operating limits including a limit power, each main engine (11,12) being capable of delivering a maximum power, when the most critical operating limit of said power plant (1) is a limit of said main power transmission gearbox (2), said calculation means (6) determines said second setpoint *W₂** equal to said limit power of said main power transmission gearbox (2) from which the sum of said maximum powers of each main engine (11,12) is subtracted.

13. Power plant (1) according to claim 12,
**characterised in that** said maximum power of each main engine (11,12) is defined according to the phase of flight of said aircraft (30).

14. Power plant (1) according to any one of claims 10 to 13,
**characterised in that** said first engine group (10) comprises two identical main engines (11,12) and said second engine group (20) comprises one secondary engine (21).

15. Power plant (1) according to any one of claims 10 to 14,
**characterised in that** in the event of failure of at least one main engine (11,12), said second regulating device (25) is configured to regulate the operation of each secondary engine (21) according to said first setpoint *NR** of said frequency of rotation *NR* of said main rotor (31).

16. Rotary wing aircraft (30) comprising at least a main rotor (31), a power plant (1) and an avionics installation (5), said power plant (1) driving said main rotor (31) in rotation,
**characterised in that** said power plant (1) is according to any one of claims 10 to 15.
